(19) Europäisches Patentamt
European Patent Office
Office européen des brevets

(11) **EP 2 590 342 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(51) Int Cl.:
***H04B 7/26*** *(2006.01)*

(21) Anmeldenummer: **12191280.2**

(22) Anmeldetag: **05.11.2012**

(54) **Sensorfunksystem**

Sensor radio system

Système radio de capteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2011 DE 102011085804**

(43) Veröffentlichungstag der Anmeldung:
**08.05.2013 Patentblatt 2013/19**

(73) Patentinhaber:
• **Fraunhofer-Gesellschaft zur Förderung der angewandten Forschung e.V.**
**80686 München (DE)**
• **Technische Universität München**
**80333 München (DE)**
• **Technische Universität Berlin**
**10623 Berlin (DE)**

(72) Erfinder:
• **Boche, Holger**
**10318 Berlin (DE)**
• **Goldenbaum, Mario**
**10437 Berlin (DE)**
• **Stanczak, Slawomir**
**10551 Berlin (DE)**

(74) Vertreter: **Schenk, Markus et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
**DE-A1-102010 000 735**

• **MARIO GOLDENBAUM ET AL: "Computing the geometric mean over multiple-access channels: Error analysis and comparisons", 2010 44TH ASILOMAR CONFERENCE ON SIGNALS, SYSTEMS AND COMPUTERS - 7-10 NOV. 2010 - PACIFIC GROVE, CA, USA, IEEE, PISCATAWAY, NJ, USA, 7. November 2010 (2010-11-07), Seiten 2172-2178, XP031860937, DOI: 10.1109/ACSSC.2010.5757936 ISBN: 978-1-4244-9722-5**
• **MARIO GOLDENBAUM ET AL: "On Function Computation via Wireless Sensor Multiple-Access Channels", WIRELESS COMMUNICATIONS AND NETWORKING CONFERENCE, 2009. WCNC 2009. IEEE, IEEE, PISCATAWAY, NJ, USA, 5. April 2009 (2009-04-05), Seiten 1-6, XP031454337, ISBN: 978-1-4244-2947-9**

**Beschreibung**

Die Erfindung betrifft ein Sensorfunksystem und ein Verfahren zum Betreiben eines Sensorfunksystems.

Sensorfunksysteme bestehen aus mehreren verteilten Sendern, die ihre Messdaten zur Weiterverarbeitung an einen Empfänger senden. Beispiele für derartige Sensorfunksysteme sind Temperaturmessstationen zur Temperaturüberwachung oder allgemein Systeme zur Umgebungsüberwachung, zur Beobachtung physikalischer Phänomene, zur Gebäudesicherheit oder auch zur Qualitätssicherung.

Jeder Sender (Funkstation mit Sensorbaugruppe) überträgt die gemessenen Messwerte über einen Funkkanal an einen Empfänger (Fusionszentrum, Access Point, Sammelknoten, zentrale Prozessoreinheit). Der Funkkanal ist als Vielfachzugriffskanal ausgestaltet, um die Übertragungskapazität auf die einzelnen Sender aufzuteilen. Die Aufteilung der Übertragungskapazität kann beispielsweise mit dem Frequenzvielfachzugriff (Frequency Division Multiple Access, FDMA) oder mit dem Zeitvielfachzugriff (Time Division Multiple Access, TDMA) erfolgen.

Bei Sensorfunksystemen, die auf diese Weise organisiert sind, ist zwischen der eigentlichen Messwertübertragung und der Funktionswertberechnung zu unterscheiden. Zunächst überträgt jeder Sender die vollständige Messwertinformation an den Empfänger. Sobald alle Messwerte im Empfänger vorliegen, erfolgt dann eine Weiterverarbeitung der Messwerte nach einer vorgegebenen Funktion.

Dieses Vorgehen stößt dann an seine Grenzen, wenn die Anzahl der Sender sehr groß ist und wenn das Sensorfunksystem zusätzlich noch in verschiedene Untergruppen mehrerer Empfänger unterteilt ist. Wenn L die Slotanzahl pro Empfänger und K die Anzahl der Empfänger ist, dann müssen bei einem TDMA-Kanal K·L Timeslots vorgesehen werden. Darüber hinaus ist es zusätzlich denkbar, dass bestimmte Sender aus dem gesamten Sensorfunksystem ausscheiden oder auch neue Sender hinzukommen. Es ist offensichtlich, dass aufgrund der notwendigen Koordination (Signalisierungsmitteilungen, Adressierung der Knoten, Acknowledgements, etc.) hier schnell ein Overhead erzeugt wird, der dazu führt, dass das Sensorfunksystem auf diese Weise nur noch mit unverhältnismäßig hohem Aufwand betrieben werden kann.

Zur Lösung dieses Problems ist aus DE 102010000735 A1 sowie aus M. Goldenbaum and S. Stanczak and M. Kaliszan: On Function Computation via Wireless Sensor Multiple-Access Channels, Proc. IEEE Wireless Communications & Networking Conference (WCNC), Budapest, Hungary, 2009 ein Ansatz bekannt, bei dem die Überlagerungseigenschaft drahtloser Vielfachzugriffskanäle für Funktionsberechnungen ausgenutzt wird. Der Funkkanal arbeitet hierbei als eine Art Analogrechner. Die zu übertragene Leistung eines jeden Senders hängt von dem jeweiligen Messwert ab, sodass mit einem empfängerseitigen Leistungsschätzer eine Addition aller empfangenen Leistungen erfolgen kann. Durch eine geeignete Vorverarbeitung und eine geeignete Nachbearbeitung ist neben der Addition auch die Berechnung von anderen Funktionen möglich. Durch eine Logarithmus-Bildung auf der Senderseite und eine nachfolgende Exponentenbildung auf der Empfängerseite kann beispielsweise eine Multiplikation erfolgen.

Dieser Ansatz macht sich die Tatsache zunutze, dass in vielen Anwendungen von Sensorfunksystemen der jeweilige Empfänger häufig nicht daran interessiert ist, die einzelnen Messwerte der jeweiligen Sender zu rekonstruieren. Vielmehr geht es oft nur um die Berechnung einer Funktion aller Messwerte, sodass die Messwerte selber im Empfänger nicht mehr benötigt werden.

Der bekannte Ansatz hat allerdings zwei wesentliche Nachteile: Der erste Nachteil besteht darin, dass nur die Berechnung einiger weniger stetiger Funktionen möglich ist. Der zweite Nachteil ist darin zu sehen, dass die senderseitige Vorverarbeitung von der empfängerseitigen Nachverarbeitung abhängt. Wenn also empfängerseitig die Berechnung einer anderen Funktion erfolgen soll, dann muss hierfür im Allgemeinen die senderseitige Vorverarbeitung angepasst werden, was wiederum einen neuen Koordinationsaufwand mit sich bringt.

Aufgabe der Erfindung ist es daher, den Overhead, und damit den Energieverbrauch und die Komplexität, in einem Sensorfunksystem zu reduzieren, ohne die Funktionenberechnung im Empfänger in irgendeiner Weise zu beschränken.

Diese Aufgabe wird durch ein Sensorfunksystem nach Anspruch 1 und durch ein Verfahren zum Betreiben eines Sensorfunksystems nach Anspruch 6 gelöst.

Das erfindungsgemäße Sensorfunksystem besteht aus mehreren Sendern n der Anzahl N und einem Empfänger, der mit den Sendern n jeweils über einen drahtlosen Vielfachzugriffskanal in Verbindung steht, wobei der Vielfachzugriffskanal mehrere Slots bzw. Zeitschlitze m der Anzahl M innerhalb eines Übertragungsrahmens aufweist, wobei jeder Sender n bestückt ist

- mit einem Sensor, der an seinem Ausgang einen Messwert $x_n$ liefert,

- mit einem Skalierungsgenerator, der jeden Messwert $x_n$ auf einen Skalierungswert $g_{nm}(x_n)$ in Abhängigkeit von einem Slot m des Vielfachzugriffskanals skaliert, und

- mit einer Funkstation, die innerhalb eines Slots m den Skalierungswert $g_{nm}(x_n)$ über den Vielfachzugriffskanal an den Empfänger überträgt,

wobei der Empfänger bestückt ist

- mit einem Signalstärkeschätzer und

- mit einem Funktionengenerator, der mit dem Ausgang des Signalstärkeschätzers verschaltet ist,

wobei innerhalb eines Slots m alle dem Slot m zugeordneten Skalierungswerte $g_{nm}(x_n)$ der Sender n gleichzeitig zur Weiterverarbeitung an den Signalstärkeschätzer übertragen werden, und wobei innerhalb eines Übertragungsrahmens der Skalierungsgenerator eines jeden Senders n für jeden Slot m einen anderen Skalierungswert $g_{nm}(x_n)$ liefert, sodass mit dem Funktionengenerator aus den Ausgangswerten des Signalstärkeschätzers eine vorgegebene stetige Funktion $f(x_1, ..., x_N)$ berechenbar ist.

Erfindungsgemäß stellt die Erfindung außerdem ein Verfahren zum Betreiben eines Sensorfunksystems bereit, bei dem mehrere Sender n der Anzahl N vorgesehen werden und bei dem ein Empfänger vorgesehen wird, der mit den Sendern n jeweils über einen drahtlosen Vielfachzugriffskanal in Verbindung steht, wobei der Vielfachzugriffskanal mehrere Slots m der Anzahl M innerhalb eines Übertragungsrahmens aufweist, wobei jeder Sender n bestückt wird

- mit einem Sensor, der an seinem Ausgang einen Messwert $x_n$ liefert,

- mit einem Skalierungsgenerator, der jeden Messwert $x_n$ auf einen Skalierungswert $g_{nm}(x_n)$ in Abhängigkeit von einem Slot m des Vielfachzugriffskanals skaliert, und

- mit einer Funkstation, die innerhalb eines Slots m den Skalierungswert $g_{nm}(x_n)$ über den Vielfachzugriffskanal an den Empfänger überträgt,

wobei der Empfänger bestückt wird

- mit einem Signalstärkeschätzer und

- mit einem Funktionengenerator, der mit dem Ausgang des Signalstärkeschätzers verschaltet ist,

wobei innerhalb eines Slots m alle dem Slot m zugeordneten Skalierungswerte $g_{nm}(x_n)$ der Sender n gleichzeitig zur Weiterverarbeitung an den Signalstärkeschätzer übertragen werden, und wobei innerhalb eines Übertragungsrahmens der Skalierungsgenerator eines jeden Senders n für jeden Slot m einen anderen Skalierungswert $g_{nm}(x_n)$ liefert, sodass mit dem Funktionengenerator aus den Ausgangswerten des Signalstärkeschätzers eine vorgegebene stetige Funktion $f(x_1, ..., x_N)$ berechenbar ist.

Die Erfindung beruht auf der Erkenntnis, dass sich jede stetige Funktion $f(x_1, ..., x_N)$ von N Messwerten aus den Summen von geeigneten Unterfunktionen berechnen lässt. Wenn nun die Unterfunktionen in einer geeigneten Weise auf die Sender und auf den Empfänger aufgeteilt werden, dann ist es möglich, mit einem Signalstärkeschätzer eine zentrale Summenbildung vorzunehmen, ohne dass die senderseitige Vorverarbeitung noch von der empfängerseitigen Nachverarbeitung abhängt.

Ein Signalstärkeschätzer im Sinne der vorliegenden Erfindung ist eine Komponente, die die empfangene Signalstärke im Empfänger schätzt. In der Regel erfolgt dies durch eine Abtastung des empfangenen Signals. Diese Signalstärkeschätzung hat das Ziel, auf die Überlagerung aller SendeSignalstärken zu schließen. Die Sendesignalstärken hängen wiederum von der jeweiligen Vorverarbeitung ab, die im Sender stattfindet. Am Ausgang des Signalstärkeschätzers erhält man damit eine Summe aller Vorverarbeitungen. Die senderseitige Vorverarbeitung wird dabei ausführlich in DE 102010000735 A1 sowie M. Goldenbaum, S. Stanczak, M. Kaliszan: On Function Computation via Wireless Sensor Multiple-Access Channels, Proc. IEEE Wireless Communications & Networking Conference (WCNC), Budapest, Hungary, 2009, beschrieben, sodass auf diese Dokumente verwiesen wird. Insbesondere wird in diesen Dokumenten darauf eingegangen, wie das Problem der Synchronisierung zwischen den einzelnen Sendern gelöst werden kann. Die dort beschriebene Vorverarbeitung sieht vor, die zu sendende Information, d.h. den skalierten Messwert, vorzuverarbeiten, nämlich indem dieser Wert den Betrag von Symbolen festlegt, welche Symbole zusammen eine Zufallssymbolfolge mit einer Folge von Symbolen mit zufällig zeitlich variierender, pseudo-zufällig zeitlich variierender oder deterministisch mit einer Gleichverteilung zeitlich variierender Phase und dem genannten Betrag, der für die Symbole gleich ist, bilden, die dann gesendet wird. Eine Blocksynchronisation zur zeitlichen Überlagerung der Symbolfolgen ist dann ausreihend. Die jeweilige Vorverarbeitung auf Senderseite wirkt sich dabei auf die Sendeleistungen aus und nicht auf die Amplitude, so dass bei Verwendung genannter Vorverarbeitung bei den vorliegend beschriebene Ausführungsbeispielen die Signalleistung als Signalstärke beim Signalstärkeschätzer empfangsseitig geschätzt bzw. ausgewertet würde. Alternativ kann der Empfänger anstelle eines Leistungsschätzers als Signalstärkeschätzer aber auch mit einem Amplitudenschätzer ausgestattet sein, nämlich dann, wenn die Vorteile in Bezug auf die Synchronisationsanforderungslockerung nicht so entscheidend sind, weil die Synchronisation beispielsweise anderweitig ohnehin notwendig ist.

Ein Slot im Sinne der Erfindung ist ein bestimmter Teil der Übertragungskapazität des gesamten Vielfachzugriffskanals, der dem jeweiligen Sender für die Übertragung zur Verfügung gestellt wird. Die Aufteilung der Übertragungskapazität kann beispielsweise mit dem Frequenzvielfachzugriff (Frequency Division Multiple Access, FDMA) oder mit dem Zeitvielfachzugriff (Time Division Multiple Access, TDMA) erfolgen.

Der theoretische Hintergrund der Erfindung wird im Folgenden erläutert, wobei exemplarisch angenommen wird, dass die Aufteilung der Übertragungskapazität mit dem Zeitvielfachzugriff erfolgt.

Aus J. Braun, M. Griebel: On a Constructive Proof of Kolmogorov's Superposition Theorem. Constr. Approx., 30(3):653-675, 2009, ist es zunächst bekannt, dass sich jede stetige Funktion f von N Messwerten in der Form

$$f(x_1,\ldots,x_N) = \sum_{m=0}^{2N} \psi_m \left( \sum_{n=1}^{N} \alpha_n \varphi(x_n + ma) \right) \tag{1}$$

darstellen lässt, wobei $\varphi$ und $\psi_m$ stetige Funktionen sind.

Gemäß der Erfindung soll die innere Summe aus (1)

$$\sum_{n=1}^{N} \alpha_n \varphi(x_n + ma) \tag{2}$$

als eine Überlagerung von vorverarbeiteten Messdaten $x_n$ der im Netz befindlichen Sender gebildet werden. Die Funktion $\varphi$ sowie die Konstanten $a$ und $\alpha_n$, $n = 1,\ldots,N$, hängen nicht von der Funktion $f$ ab, die berechnet werden soll. Wenn nunmehr die $N$ Sender gleichzeitig die vorverarbeiteten Messdaten $\alpha_n\varphi(x_n+0\cdot a)$ im ersten Zeitschlitz m=0 senden, so empfängt der Signalstärkeschätzer im Empfänger die Summe (2), wendet auf diese die Nachverarbeitungsfunktion $\psi_0$ an und legt das Zwischenergebnis zunächst im internen Speicher ab. Dieses Prozedere wird im direkten Anschluss für den Zeitschlitz m=l wiederholt, indem die Sender gleichzeitig die vorverarbeiteten Messwerte $\alpha_n\varphi(x_n+1\cdot a)$ übertragen, so dass der Leistungsschätzer im Empfänger die Summe $\sum_{n=1}^{N} \alpha_n \varphi(x_n + 1 \cdot a)$ empfängt, darauf die Nachverarbeitungsfunktion $\psi_1$ anwendet und das Ergebnis ebenfalls im internen Speicher ablegt. Wiederholen die Sender und der Empfänger diesen Vorgang 2N+1 mal, so braucht der Empfänger abschließend lediglich die im Speicher abgelegten Zwischenergebnisse

$$\psi_0 \left( \sum_{n=1}^{N} \alpha_n \varphi(x_n) \right), \psi_1 \left( \sum_{n=1}^{N} \alpha_n \varphi(x_n + a) \right), \ldots, \psi_{2N} \left( \sum_{n=1}^{N} \alpha_n \varphi(x_n + 2Na) \right) \tag{3}$$

aufzusummieren, um gemäß Gleichung (1) den gewünschten Funktionswert $f(x_1,\ldots,x_N)$ zu erhalten. Dabei besteht die Aufgabe der 2N+1 Summen in (3) darin, das kartesische Produkt $[0,1]^N$ in eine Teilmenge $\Gamma$ des $2N + 1$-dimensionalen Kontinuums abzubilden.

Die Vorgehensweise gemäß den Gleichungen (1), (2) und (3) lässt sich noch erweitern, wenn man nunmehr weiterhin annimmt, dass nicht nur ein Empfänger, sondern vielmehr K Empfänger aktiv sind. Jedem Empfänger ist unter den N Sendern eine Teilmenge innerhalb eines Clusters k zugeordnet. Insgesamt gibt es damit K Cluster.

Aus den obigen Erläuterungen folgt, dass sich das Empfangssignal am kten Empfänger des mten Zeitschlitzes wie folgt beschreiben lässt

$$y_{km} = \sum_{n \in C_k} \alpha_n \varphi(x_n + ma), \tag{4}$$

wobei nur die Sender des kten Clusters $C_k$ einen Beitrag zur Summe liefern. Da durch die gemeinsamen Sender zwischen den Clustern Kopplungen bestehen, ist es allerdings nicht ausreichend auf die Signale (4) unmittelbar die Nachverarbeitungsfunktionen $\psi_{km}$ anzuwenden, da die Bilder, erzeugt durch die jeweils $2N + 1$ Signale gemäß Gleichung (4) nicht notwendigerweise in der Menge $\Gamma$ liegen müssen.

Um diesen Umstand zu beheben, wird ein weiterer Nachverarbeitungsschritt eingeführt. Um also zu gewährleisten, dass die Bilder, erzeugt durch die jeweils $2N + 1$ Signale gemäß Gleichung (4) in $\Gamma$ liegen, müssen die Empfänger vor der Anwendung der Nachverarbeitungsfunktionen reelle Konstanten $\beta_{km}$ zu den Empfangssignalen addieren. Damit erhält man:

$$z_{km} = y_{km} + \beta_{km} \, , \qquad\qquad (5)$$

wobei die Konstanten die Gestalt

$$\beta_{km} := \sum_{n \notin C_k} \alpha_n \varphi(0 + ma) \qquad\qquad (6)$$

besitzen. Wenden die Empfänger jetzt die Nachverarbeitungsfunktionen auf die verschobenen Signale $z_{km}$ an, so kann die gewünschte vektorwertige Funktion

$$\mathbf{f}(x_1, \ldots, x_N) = \begin{pmatrix} \sum_{m=0}^{2N} \psi_{1m}(z_{1m}) \\ \vdots \\ \sum_{m=0}^{2N} \psi_{Km}(z_{Km}) \end{pmatrix} \qquad\qquad (7)$$

über K Cluster berechnet werden.

Aus den obigen Erläuterungen ergeben sich bevorzugte Ausführungsformen der Erfindung.

Nach einer bevorzugten Ausführungsform ist vorgesehen, dass der Skalierungsgenerator den Skalierungswert $g_{nm}(x_n)$ gemäß der Form

$$g_{nm}(x_n) = \alpha_n \cdot \varphi(x_n + m \cdot a)$$

liefert, wobei $\alpha_n$ und a Konstanten sind und wobei $\varphi$ eine stetige Funktion ist.

Nach einer weiteren bevorzugten Ausführungsform ist vorgesehen, dass der Signalstärkeschätzer die Funktion ausführt gemäß der Form

$$y_m = \sum_{n=1}^{N} g_{nm}(x_n)$$

Nach einer weiteren bevorzugten Ausführungsform ist vorgesehen, dass der Funktionengenerator die Funktion ausführt gemäß der Form

$$f(x_1, \ldots, x_N) = \sum_{m=1}^{M} \psi_m(y_m)$$

wobei $\psi_m$ stetige Funktionen sind.

Nach einer weiteren bevorzugten Ausführungsform ist vorgesehen, dass weitere Sender $n \notin C$ vorgesehen sind, die nicht zur Menge C der bestehenden Sender gehören, aber zumindest mit einigen Sendern der Menge C gekoppelt sind bzw. zumindest mit einigen Sendern der Menge C gemeinsam zum Empfang an dem Empfänger beitragen, d.h. "hineinfunken" und stören und beispielsweise zu einem oder mehreren anderen Sensorfunksystemen mit einem jeweils eigenen Empfänger gehören, wobei der Funktionengenerator die Funktion ausführt gemäß der Form

$$f(x_1, ..., x_N) = \sum_{m=1}^{M} \psi_m(z_m)$$

mit

$$z_m = y_m + \beta_m$$

und mit

$$\beta_m = \sum_{n \notin C} \alpha_n \cdot \varphi(0 + m \cdot a)$$

wobei $\psi_m$ stetige Funktionen sind. Es wird also eine Konstante $\beta_m$ eingeführt, die einer Summe über Parameter der einzelnen Störsender ($n \notin C$) entspricht. Die Störsenderindividuellen Parameter $\alpha_n$ ($n \notin C$) können vorab bestimmt bzw. optimiert werden. Es sei darauf hingewiesen, dass die Konstante $\beta_m$ nicht von den tatsächlich und aktuell gesendeten Signalen der Störsender abhängt, sondern die Auslegung derselben lediglich von der Existenz der Störsender abhängt.

Nach einer weiteren bevorzugten Ausführungsform ist vorgesehen, dass die Anzahl M der Slots m innerhalb eines Übertragungsrahmens M = 2·N+1 beträgt. Die Zwischenergebnisse $\psi_m$ werden dabei vor der Bildung der Summe über alle m Zwischenergebnisse in einem Speicher des betreffenden Empfängers gespeichert.

Das erfindungsgemäße Sensorfunksystem kommt ohne eine spezielle Protokollstruktur und damit ohne nennenswerte Koordination aus, wie sie Sensorfunksystemen nach dem Stand der Technik unbedingt notwendig ist. Darüber hinaus bietet das erfindungsgemäße Sensorfunksystem ein hohes Maß an Energieeffizienz, zeichnet sich durch eine sehr geringe Komplexität aus, kommt ohne globalen Synchronisierungsaufwand aus und ist in der Praxis sehr leicht zu implementieren.

Ein weiterer Vorteil ist die Universalität des erfindungsgemäßen Sensorfunksystems. Es ist empfängerseitig nicht notwendig, die Sender zu informieren, falls sich Funktionen im Empfänger ändern. Ist zum Beispiel der kte Empfänger nicht länger an der Funktion $f_k$ interessiert, sondern an einer Funktion $g_k$, so muss dieser dafür lediglich die Nachverarbeitungsfunktionen $\psi_{km}$, $m$=1,...,$M$ anpassen. Auf die Vorverarbeitungsfunktionen an den Sendern hat diese Änderung keinen Einfluss, weshalb die Architektur der Sender einfach gehalten werden kann und nicht auf Adaptivität ausgelegt sein muss.

Falls mehrere Cluster k und damit mehrere Empfänger k beteiligt sind, kommt das erfindungsgemäße Sensorfunksystem ohne nennenswerte Koordination zwischen den Clustern aus. Die einzelnen Cluster können deshalb unabhängig voneinander agieren. Darüber hinaus besteht in Abhängigkeit der Überlappungen der Cluster zudem ein Vorteil hinsichtlich der zeitlichen Effizienz. Bei einem Standard-TDMA System werden wie erwähnt K·L Timeslots benötigt, um die $K$ gewünschten Funktionen an den Empfängern zu berechnen. Nun ist es nicht unwahrscheinlich, dass $KL > 2N + 1$ gilt. In diesem Fall kommt das erfindungsgemäße Sensorfunksystem mit weniger Timeslots aus. Zudem kann die Anzahl der Cluster bedenkenlos vergrößert werden, da die Zahl $2N + 1$ nicht direkt mit der Anzahl $K$ der Cluster skaliert. Bei einem Standard-TDMA System gilt das nicht uneingeschränkt, da die Zahl $KL$ bei vorhandenen Überlappungen zwischen den Clustern sehr wohl mit $K$ skaliert.

Überlappungen zwischen den Clustern wirken sich also bei einem Standard-TDMA System nachteilig aus. Beim erfindungsgemäßen Sensorfunksystem ist es demgegenüber sogar denkbar, dass die Überlappungen zur Genauigkeitssteigerung ausgenutzt werden. Denkt man zum Beispiel an ein Szenario, in dem sich die Funktionen stark überlappender Cluster nicht unterscheiden, so lassen sich so entstehende Diversitätseffekte ausnutzen, um die Berechnungsgenauigkeit zu verbessern.

Bei dem erfindungsgemäßen Sensorfunksystem ist es schließlich unproblematisch, wenn sich neben den Funktionen an den Empfängern auch die Cluster verändern sollten. Zum Beispiel ist es möglich, dass die neue Funktion $g_k$ am Empfänger $k$ plötzlich von den Messdaten einer größeren Anzahl von Sendern abhängt. Bei einem Standard-TDMA System wäre dafür eine aufwändige Reorganisation des Netzes erforderlich. Ein weiterer Vorteil offenbart sich in diesem Zusammenhang, falls sich Cluster durch das Verlassen von Sendern ändern. In diesem Fall sind lediglich die Konstanten (6) entsprechend der Anzahl der ausgefallenen Sender um weitere Summanden zu ergänzen, was ebenfalls keinen Einfluss auf die übrigen aktiven Sender hat.

Weitere Einzelheiten und Vorteile der Erfindung werden aus den Figuren ersichtlich. In diesen zeigt:

Fig. 1     den prinzipiellen Aufbau eines Sensorfunksystems;

Fig. 2      ein Blockschaltbild der Berechnungsstruktur innerhalb eines Clusters;

Fig. 3      einen beispielhaften ideale MAC, der angepasst ist an die gewünschte Funktion $f$ durch vorverarbeitende Funktionen $\varphi_1$, ..., $\varphi_n$ und eine nachverarbeitende Funktionen $\psi$, die bezeichnet wird als der $f$-MAC; und

Fig. 4      Beispiele von einem (links) 1-Weg-Berechnungs-Netzwerk und einem (rechts) 2-Weg-Berechnungs-Netzwerk (d. h. mit Feedback-Kanälen zwischen Knoten und der Fusions-Zentrale).

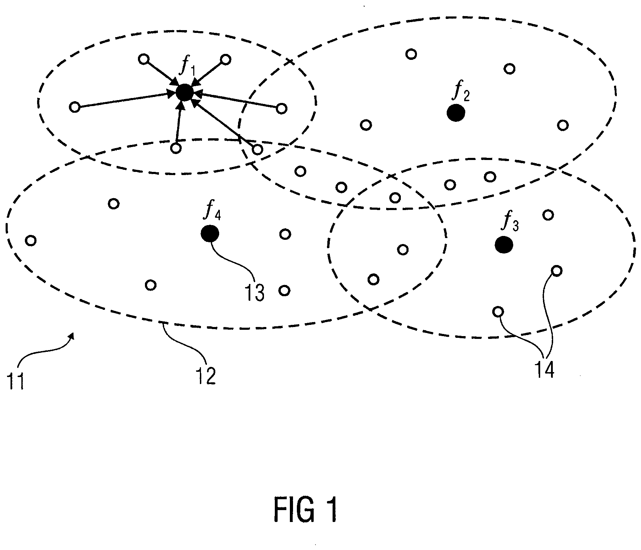

Fig. 1 zeigt den prinzipiellen Aufbau eines Sensorfunksystems. Das Sensorfunksystem 11 besteht in seiner erweiterten Form aus mehreren Clustern 12. Jeder Cluster 12 enthält einen Empfänger 13 sowie mehrere Sender 14. Die einzelnen Cluster können sich überschneiden, sodass ein Sender zu mehreren Clustern gehören kann.

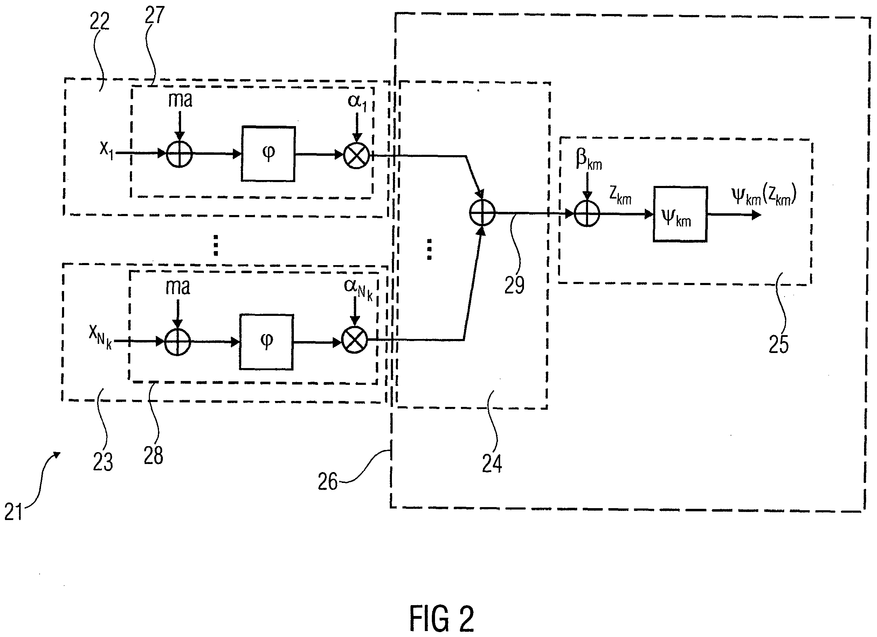

Fig. 2 zeigt ein Blockschaltbild der Berechnungsstruktur innerhalb eines Clusters 21. Das Blockschaltbild zeigt somit den kten Cluster eines Sensorfunksystems während des mten Timeslots. Innerhalb des Clusters gibt es $N_k$ Sender 22, 23 sowie einen Empfänger 26.

Jeder Sender 22, 23 ist mit einem nicht näher dargestellten Sensor ausgestattet. Die Sensoren liefern jeweils die Messwerte $x_1$ ... $x_{Nk}$. Die Messwerte $x_1$ ... $x_{Nk}$ werden jeweils einem Skalierungsgenerator 27, 28 zugeführt, der eine Operation ausführt, die einem Summanden aus Gleichung (4) entspricht. Die Ergebnisse der Skalierungsgeneratoren 27, 28 werden sodann mit einer nicht näher dargestellten Funkstation über einen Vielfachzugriffskanal an dem Empfänger 26 übertragen.

Der Empfänger 26 umfasst einen Signalstärkeschätzer 24 und einen Funktionengenerator 25. Empfängerseitig werden die von den Sendern 22, 23 übertragenen Werte über eine nicht näher dargestellte Antenne empfangen und dem Signalstärkeschätzer 24 zugeführt. Der Signalstärkeschätzer schätzt die empfangene Signalstärke an der Antenne. Das Ergebnis 29 entspricht dann dem Ergebnis der Summe aus Gleichung (4). Das im Vielfachzugriffskanal aufsummierte Ergebnis 29 wird sodann einem Funktionengenerator 25 zugeführt. Das Zwischenergebnis $\psi_{km}(z_{km})$ entspricht dabei den Zwischenergebnissen gemäß Gleichung (3). Soweit das Sensorfunksystem aus mehreren Clustern k besteht, können im Funktionengenerator noch die Konstanten $\beta_{km}$ gemäß Gleichung (6) berücksichtigt werden. Die Zwischenergebnisse $\psi_{km}(z_{km})$ werden in einem Speicher des Funktionengenerators 25 abgelegt. Sobald für alle Timeslots die Zwischenergebnisse vorliegen, kann die Summe über die Zwischenergebnisse $\psi_{km}(z_{km})$ gebildet werden. Die Summe eines Clusters k entspricht dabei einer Vektorkomponente des Vektors (7), wobei die Summen aller Cluster schließlich den Vektor gemäß Gleichung (7) bilden.

Es wird darauf hingewiesen, dass die obigen Ausführungsbeispiele darauf basieren, dass sich jede stetige Funktion $f$ von $N$ Messwerten in der Form

$$f(x_1,\ldots,x_N) = \sum_{m=0}^{2N} \psi\left( \sum_{n=1}^{N} \varphi_{mn}(x_n) \right) \qquad (*)$$

darstellen lässt, wobei die $N$ (2 $N$ + 1) Funktionen $\varphi_{mn}$ stetige Funktionen einer Variablen sind, genauso wie $\psi$. Im Folgenden wird der gerade genannte Zusammenhang hergeleitet sowie der zugehörige mathematische Hintergrund näher beschrieben. Hierbei ist insbesondere anzumerken, dass die im Folgenden beschriebenen Erläuterungen individuell auch übertragbar sind auf obige Elemente bei den obigen Ausführungsbeispielen. Es wird ferner darauf hingewiesen, dass eine zu Gleichung (*) äquivalente Darstellung von $f$ in Gleichung (1) angegeben ist.

Im Folgenden wird zunächst auf verschiedene Aspekte im Zusammenhang mit dem mathematischen Hintergrund eingegangen.

Die effiziente Berechnung von Funktionen der Messungen ist eines der Hauptprobleme in vielen drahtlosen bzw. Funk-Sensor-Netzwerk-Anwendungen, wie z. B. Umwelt-Überwachung (A. Giridhar und P. R. Kumar, "Toward a theory of in-network computation in wireless sensor networks," IEEE Commun. Mag., Bd. 44, Nr. 4, Seiten 98-107, April 2006). In diesem Zusammenhang bezieht sich "Effizienz" auf den Bedarf an (i) niedrigpreisigen Sensorknoten mit einer stark reduzierten Hardware-Komplexität und (ii) einfachen Kommunikationsstrategien, die weniger Drahtlos-Ressourcen erfordern und eine längere Betriebs-Lebensdauer ermöglichen aufgrund des reduzierten Gesamt-EnergieVerbrauchs.

In aktuellen Netzwerken, die eingesetzt werden, um Funktionen von Sensor-Ablesungen zu berechnen, senden die Knoten ihre Beobachtungen an eine Fusions-Zentrale (Fusionszentrum) unter Verwendung ihrer integrierten Radio-Schnittstellen. Um eine Interferenz aufgrund von zusammenfallenden Transmissionen zu vermeiden, wird der Medium-Zugang im Allgemeinen koordiniert durch ein Standard-Medium-Zugangs-Protokoll, wie z. B. "Time-Division Multiple Access - TDMA" oder "Carrier-Sense Multiple Access - CSMA", das die Kommunikations-Links zeitlich separiert durch Zuweisung seines eigenen Time-Slots (Slots) an jeden Sensorknoten. Die Fusions-Zentrale rekonstruiert die Sensor-Ablesungen von den separat empfangenen Transmissionssignalen und berechnet nachfolgend die Funktion.

Dieser Ansatz trennt strikt die Prozesse von Kommunikation und Berechnung und kann daher höchst suboptimal sein, da die Fusions-Zentrale nicht interessiert ist an individuellen Roh-Sensor-Ablesungen, sondern eher an einer Funktion von diesen Ablesungen, die als die gewünschte Funktion bezeichnet wird. Um die Prozesse zu verbinden, führten Nazer und Gastpar ein neues Informations-Theorie-Konzept (in B. Nazer und M. Gastpar, "Computation over multiple-access channels," IEEE Trans. Inf. Theory, Bd. 53, Nr. 10, Seiten 3498-3516, Oktober 2007) ein, das direkt die Überlagerungseigenschaft des zugrundeliegenden Vielfachzugriffskanals (MAC, Multiple-Access Channel) ausnutzt. Ähnlich dazu verwendeten (in S. Stanczak, M. Wiczanowski und H. Boeche, "Distributed utility-based power control: Objectives and algorithms," IEEE Trans. Signal Process., Bd. 55, Nr. 10, Seiten 5058-5068, Oktober 2007) Stanczak u. a. den Drahtlos-MAC, um Funktionen von Signal-zu-Interferenz-Verhältnissen auf verteilte Weise zu berechnen, um optimale Ressourcenzuweisungen zu bestimmen. Diese Ansicht führt zu effizienteren Berechnungen, vorausgesetzt, dass die gewünschte Funktion an die natürliche Berechnungseigenschaft des MAC angepasst ist.

Motiviert durch diese Abstraktion des Funkkanals als ein *Computer* stellten die Autoren von M. Goldenbaum, S. Stanczak und M. Kaliszan, "On function computation via wireless sensor multiple-access channels", in Proc. IEEE Wireless Communications & Networking Conference (WCNC), Budapest, Ungarn, April 2009, M. Goldenbaum, S. Stanczak, "Computing the geometric mean over multiple-access channels: Error analysis and comparisons", in Proc. 44th Asilomar Conference on Signals, Systems and Computers, Pacific Grove, USA, Nov. 2010, Seiten 2.172 - 2.178, ein neues analoges (d. h. nichtdigitales/uncodiertes) Berechnungsschema vor, das TDMA in vielen relevanten Drahtlos-Sensor-Netzwerk-Szenarios von Interesse an Leistung übertrifft. Das Schema verwendet geeignete vorverarbeitende Funktionen (Vorverarbeitungsfunktionen), die auf realen Sensor-Ablesungen vor Transmissionen operieren, und eine nachverarbeitende Funktion (Nachverarbeitungsfunktion), die auf dem reellen überlagerten Signal, das von der Fusions-Zentrale empfangen wird, operiert, um den resultierenden Gesamt-Kanal an eine nichtlineare gewünschte Funktion anzupassen. Im Prinzip ermöglicht der Ansatz die analoge Berechnung von jeder reellen Funktion *f* von Sensor-Ablesungen $x_1$, ..., $x_n$, die in der Form $f(x_1, \ldots, x_n) = \psi\left(\sum_{i=1}^{n} \varphi_i(x_i)\right)$ darstellbar ist, wobei *n* die Anzahl von Knoten bezeichnet und $\varphi_1, \ldots, \varphi_n, \psi$ die reelle univariante Vor- bzw. Nachverarbeitungsfunktionen sind.

Früher wurden mehrere Beispiele von gewünschten Funktionen von praktischer Relevanz gezeigt, die solche Darstellungen besitzen, ohne eine exakte Charakterisierung von dem entsprechenden Funktionsraum zu spezifizieren. Eine detailliertere Analyse, die hier vorgestellt wird, kann einem System-Designer helfen, um zu entscheiden, ob (oder ob nicht) eine vorgegebene gewünschte Funktion von Sensor-Ablesungen berechnet oder zumindest approximiert werden kann, und zwar mittels einem Funk-Vielfach-Zugriffs-Kanal unter Verwendung des früher vorgestellten analogen Berechnungsschemas. Die Analyse, die hier vorgestellt wird, wird durchgeführt unter der Annahme eines idealen MAC oder einer Zeitfolge von idealen MAC-Ausgängen.

In diesem Zusammenhang werden vorwiegend dynamische Berechnungs-Netzwerke, in welchen gewünschte Funktionen sich ändern können, und das Problem des Identifizierens von *Kommunikations-Pattern,* die ausreichend sind im Sinne von Feedback (Rückkopplung) zwischen der Fusions-Zentrale und den Knoten, behandelt. Dies ist erforderlich, da die Menge von Feedback-Information über die Funktion, die die Fusions-Zentrale berechnen möchte, die Hardware-Komplexität und somit die Intelligenz von Sensorknoten (d. h. "Smart Nodes" vs. "Dumb Nodes") wesentlich bestimmt.

Präziser ausgedrückt, es werden hier die folgenden zwei Probleme behandelt.

Problem 1 (Berechnung): Welche Funktionen sind berechenbar oder approximierbar mittels einem Funk-Vielfach-Zugriffs-Kanal?

Problem 2 (Kommunikation): Wie viel *Wissen* über die gewünschte Funktion ist erforderlich an Sensorknoten?

Bei dem Problem 2 wird zwischen Ein-Weg- und Zwei-Weg-Berechnungs-Netzwerken unterschieden, wobei Letztere sich auf den Fall mit Feedback-Kanälen zwischen der Fusions-Zentrale und den Sensorknoten beziehen, wie es im Folgenden ausgeführt wird.

*A. Beitrag*

Der hier gelieferte Beitrag wird wie folgt zusammengefasst:
Theorem 1 besagt, dass, wenn keine zusätzlichen Restriktionen auferlegt werden, dann ist *jede reelle Funktion* von *n* Variablen berechenbar mittels dem Funk-Kanal. Ferner ist keine Information über die gewünschte Funktion an Sensorknoten erforderlich (d. h. kein Feedback).

Wenn Vor- und Nachverarbeitungsfunktionen kontinuierlich sein sollen, besagt Theorem 2, dass nur eine spärliche (dünn besiedelte) Untermenge von kontinuierlichen reellen Funktionen von *n* Variablen berechenbar ist.

Es wird gezeigt, dass bestimmte gewünschte Funktionen von praktischer Relevanz, die nicht in der dünn besiedelten Untermenge enthalten sind, mittels dem Funk-MAC durch einfache Relaxationen berechnet oder approximiert werden können.

Dann wird das Transmissions-Szenario geändert unter Verwendung einer Zeitfolge von aufeinanderfolgenden empfangenen MAC-Ausgangs-Signalen für Berechnungen, und es wird realisiert, dass nun die Frage bezüglich berechenbarer gewünschter Funktionen eng verbunden ist mit dem 13. Hilbert-Problem. Diese Einsicht führt zu Theorem 3, das besagt, dass jede kontinuierliche Funktion von $n$ Variablen berechenbar ist, und zwar mit universellen kontinuierlichen Vor- und Nachverarbeitungsfunktionen sowie $2n + 1$ aufeinanderfolgende empfangene MAC-Ausgangs-Signalen.

Von den Theoremen 1 und 3 wird gefolgert, dass es ausreichend ist, *"Dumb"-Sensorknoten* zu verwenden mit einer Hardware, die unabhängig von der gewünschten Funktion ist, so dass die Komplexität von Knoten drastisch reduziert werden kann.

*B. Bemerkungen zur Notation*

Das *k*-fache kartesische Produkt

$$\mathbb{A} \times \cdots \times \mathbb{A}$$

von einem Raum $\mathbb{A}$ wird geschrieben als $\mathbb{A}^k$. Die natürlichen und reellen Zahlen werden bezeichnet als $\mathbb{N}$ bzw. $\mathbb{R}$, und

$$\mathbb{E} := [0, 1] \subset \mathbb{R}$$

definiert das Einheitsintervall. Sei $\mathbb{A}^k$ ein kompakter Hausdorfftopologischer Raum, dann bezeichnet $\mathcal{C}[\mathbb{A}^k]$ mit der Unendlichkeitsnorm $\|\cdot\|\infty$ den Banach-Raum von reellwertigen kontinuierlichen Funktionen von

$$k \in \mathbb{N}$$

Variablen, definiert auf $\mathbb{A}^k$. Ferner bezeichnet $\mathcal{F}[\mathbb{B}^\ell]$ den Raum von jeder Funktion

$$g : \mathbb{B}^\ell \subseteq \mathbb{R}^\ell \to \mathbb{R}, \ \ell \in \mathbb{N}.$$

Im Folgenden wird ein System-Modell beschrieben.

Es wird ein Funk-Sensor-Netzwerk bestehend aus n ≥ 2 räumlich verteilten, gleichzeitig aktiven Knoten und einer designierten Fusions-Zentrale betrachtet. Die Knoten beobachten gemeinsam ein bestimmtes physikalisches Phänomen mit der Folge von unverfälschten Sensor-Ablesungen

$$x_i \in \mathbb{E},$$

$i = 1, ..., n$.

*A. Berechnung*

Ein Sensornetzwerk wird betrachtet als eine Kollektion von verteilten Berechnungsvorrichtungen, das auf ein effizientes Berechnen von vorgegebenen *gewünschten Funktionen*

$$f \in \mathcal{F}[\mathbb{E}^n]$$

von Sensor-Ablesungen an einer Fusions-Zentrale (d. h. $f(x_1, ..., x_n)$) abzielt. Manche Beispiele für die gewünschte Funktion von großer praktischer Bedeutung sind die Folgenden (M. Goldenbaum, S. Stanczak und M. Kaliszan, "On function computation via wireless sensor multiple-access channels", in Proc. IEEE Wireless Communications & Networking Conference (WCNC), Budapest, Ungarn, April 2009, M. Goldenbaum, S. Stanczak, "Computing the geometric mean over multiple-access channels: Error analysis and comparisons", in Proc. 44th Asilomar Conference on Signals, Systems and Computers, Pacific Grove, USA, Nov. 2010, Seiten 2.172 - 2.178).

*Beispiel 1 (gewünschte Funktionen):*

i) *arithmetisches Mittel:* $f(x_1, \ldots, x_n) = \frac{1}{n} \sum_i x_i$

ii) *geometrisches Mittel:* $f(x_1, \ldots, x_n) = \left( \prod_i x_i \right)^{\frac{1}{n}}$

iii) *maximaler Wert:* $f(x_1, \ldots, x_n) = \max_{1 \leq i \leq n} \{x_i\}$

iv) *Anzahl von aktiven Knoten:* $f(x_1, \ldots, x_n) = n$

*Definition 1 (Funk-MAC):*

Sei

$$s_i(x_i) \in \mathbb{R}$$

ein Transmissionssignal von Knoten i abhängig von einem abgetasteten Wert

$$x_i \in \mathbb{E},$$

$i = 1, \ldots, n$, sei

$$h_i \in \mathbb{R}$$

eine Überblendungs-Verstärkung (Fading Gain) zwischen Knoten *i* und der Fusions-Zentrale, und sei

$$n_i \in \mathbb{R}.$$

Empfängerrauschen. Dann wird das Standard-Linear-Modell

$$(x_1, \ldots, x_n) \mapsto \sum_{i=1}^{n} h_i s_i(x_i) + n_i \tag{1'}$$

von einem Funk-Vielfach-Zugriffs-Kanal als der *Funk-MAC* bzw.

$$(x_1, \ldots, x_n) \mapsto \sum_{i=1}^{n} s_i(x_i) \tag{2'}$$

als der ideale MAC bezeichnet.

Gleichung (2') offenbart, dass die natürliche mathematische Eigenschaft des Funk-MAC einfach eine Summation ist, die sofort verwendet werden kann, um manche lineare gewünschte Funktionen auf effiziente Weise zu berechnen.

Um die Berechnung von bestimmten nichtlinearen gewünschten Funktionen ebenfalls mit Hilfe von dem Funk-MAC zu ermöglichen, werden die Begriffe von Vor- und Nachverarbeitungsfunktionen eingeführt (M. Goldenbaum, S. Stanczak und M. Kaliszan, "On function computation via wireless sensor multiple-access channels", in Proc. IEEE Wireless Communications & Networking Conference (WCNC), Budapest, Ungarn, April 2009, M. Goldenbaum, S. Stanczak, "Computing the geometric mean over multiple-access channels: Error analysis and comparisons", in Proc. 44th Asilomar Conference on Signals, Systems and Computers, Pacific Grove, USA, Nov. 2010, Seiten 2.172 - 2.178).

*Definition 2 (Vorverarbeitungsfunktionen):*

Die n reellen univarianten Funktionen

$$\varphi_i \in \mathcal{F}[\mathbb{E}],$$

die auf den Sensor-Ablesungen

$$x_i \in \mathbb{E}$$

(d. h. $\varphi_i(x_i)$, $i = 1,...,n$) operieren, werden definiert als die vorverarbeitenden Funktionen bzw. Vorverarbeitungsfunktionen.

*Definition 3 (Nachverarbeitungsfunktionen):*

Sei

$$y \in \mathbb{R}$$

der Ausgang des Funk-MAC gemäß der Definition 1. Dann wird die univariante Funktion

$$\psi \in \mathcal{F}[\mathbb{R}],$$

die auf $y$ (d. h. $\psi(y)$) operiert, definiert als die nachverarbeitende Funktion.

*Bemerkung 1:*

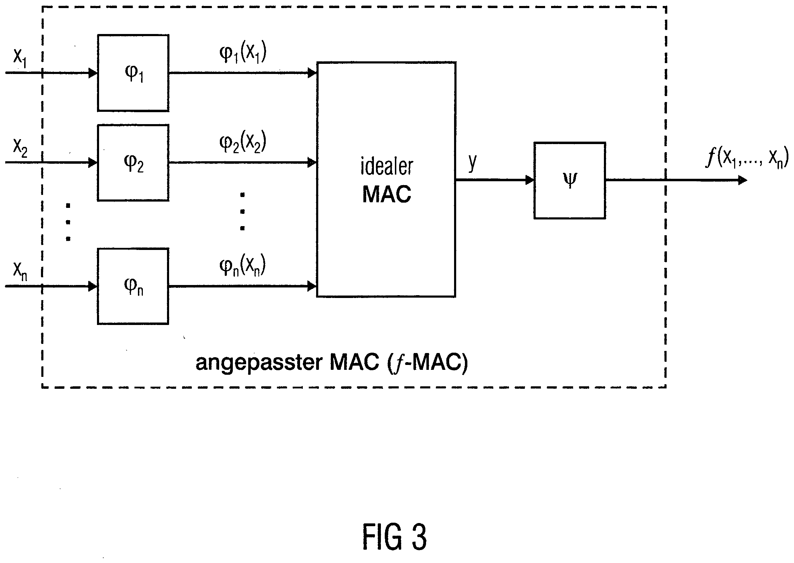

Die vor- und nachverarbeitenden Funktionen transformieren den idealen MAC so, dass der resultierende Gesamt-Kanal, der im Folgenden als der *f*-MAC bezeichnet wird, an die Struktur von der gewünschten Funktion angepasst ist (siehe Fig. 3).
Es folgt, dass der Raum von gewünschten Funktionen, der durch einen *f*-MAC berechnet werden kann, aus jeder Funktion mit einer Darstellung gemäß Fig. 3 besteht, das heißt

$$\left\{ f \in \mathcal{F}[\mathbb{E}^n] \,\middle|\, \exists (\varphi_1, \ldots, \varphi_n, \psi) \in \mathcal{F}[\mathbb{E}] \times \cdots \right.$$
$$\left. \cdots \times \mathcal{F}[\mathbb{E}] \times \mathcal{F}[\mathbb{R}] : f(x_1, \ldots, x_n) = \psi\left( \sum_{i=1}^{n} \varphi_i(x_i) \right) \right\} \tag{3'}$$

Um die Probleme 1 und 2 zu lösen, wird hier der Funktionsraum (3') analysiert.

*Bemerkung 2:*

Obwohl praktische Berechnungsschemas an Einschränkungen leiden, wie z. B. Leistungsschwierigkeiten, Überblendung (Fading), Empfängerrauschen oder Synchronisationsproblemen, wird hier auf den Funktionsraum (3') basierend auf dem *f*-MAC abgezielt. Die Erweiterung auf realistische MACs (1') erfolgt entlang derselben Linien wie in M. Goldenbaum, S. Stanczak, "Computing the geometric mean over multiple-access channels: Error analysis and comparisons", in Proc. 44th Asilomar Conference on Signals, Systems and Computers, Pacific Grove, USA, Nov. 2010, Seiten 2.172 - 2.178, -----, "Computing functions via simo multiple-access channels: How much channel knowledge is needed?" in Proc. IEEE International Conference on Acoustics, Speech and Signal Processing (ICASSP), Dallas, USA, März 2010, Seiten 3.394 - 3.397.

*B. Kommunikation*

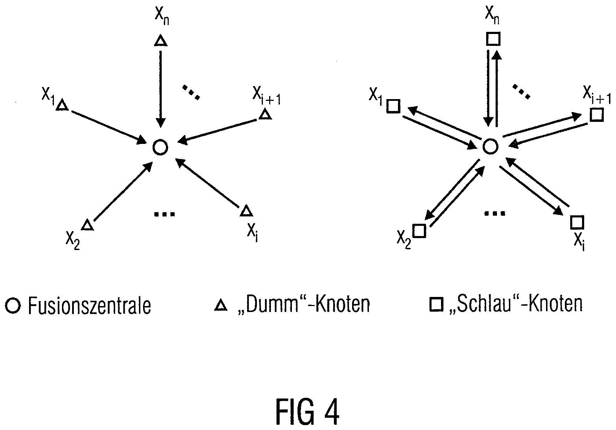

Im Folgenden wird erlaubt, dass gewünschte Funktionen sich in der Zeit ändern können, und es wird daher unterschieden zwischen den folgenden Kommunikations-Pattern, um zu bestimmen, welches erforderlich oder ausreichend ist für geeignete Berechnungen (siehe Fig. 4).

*Definition 4 (Kommunikations-Pattern):*

(i) *1-Weg-Berechnungs-Netzwerk:* Ein Berechnungs-Netzwerk bestehend aus Knoten, die nicht Wissen über die gewünschte Funktion erfordern, wird bezeichnet als ein *1-Weg-Berechnungs-Netzwerk.*

(ii) *2-Weg-Berechnungs-Netzwerk:* Ein Berechnungs-Netzwerk wird bezeichnet als ein *2-Weg-Berechnungs-Netzwerk,* wenn es Feedback-Kanäle enthält zwischen der Fusions-Zentrale und den Knoten, um über die gewünschte Funktion zu informieren.

*Bemerkung 3:*

Es ist anzumerken, dass das Kommunikations-Pattern unmittelbar die Komplexität von Knoten beeinflusst, da ein 1-Weg-Berechnungs-Netzwerk nur "Dumb"-Sensoren benötigt, weil die gesamte Intelligenz (d. h. das Wissen über die zu berechnende Funktion) in der Fusions-Zentrale konzentriert ist, während ein 2-Weg-Berechnungs-Netzwerk "Smart"-Knoten erfordert, sodass die Intelligenz im gesamten Netzwerk ist (siehe Fig. 4). In diesem Zusammenhang stellt Problem 2 die Frage, welche gewünschten Funktionen durch 1-Weg- oder 2-Weg-Berechnungs-Netzwerke berechenbar sind.
Im Folgenden wird eine Berechnung mittels idealen Vielfach-Zugriffs-Kanälen beschrieben.
In diesem Abschnitt wird der Funktionsraum (3') mit und ohne Beschränkungen auf vor- und nachverarbeitende Funktionen analysiert. Es stellt sich im Folgenden heraus, dass Kontinuität eine wesentliche Rolle spielt.

*A. Ergebnisse*

Das folgende Theorem, wie das hier vorgestellte Haupttheorem, löst beide Probleme 1 und 2. Der Beweis kann in dem nachfolgenden Abschnitt gefunden werden.

*Theorem 1:*

Jede gewünschte Funktion ist berechenbar mittels einem *f*-MAC unter Verwendung eines 1-Weg-Berechnungs-Netzwerks.

*Bemerkung 4*:

Es ist ziemlich überraschend, dass jede gewünschte Funktion von Sensor-Ablesungen *universell* berechnet werden kann durch einen Funk-MAC, sodass kein Feedback über die gewünschte Funktion (d. h. kein 2-Weg-Berechnungs-Netzwerk) erforderlich ist. Die Fusions-Zentrale entscheidet durch eine angemessene Auswahl von $\psi$, welches *f* berechnet werden soll (d. h. die gesamte Intelligenz ist in der Fusions-Zentrale).

*Beobachtung 1:*

Die Hard- und Software von Sensorknoten ist unabhängig von der zu berechnenden gewünschten Funktion an der Fusions-Zentrale.

B. Beweis, Beobachtungen und Relaxationen

Es ist eine interessante Koinzidenz, dass der hier ferner zu charakterisierende praktisch motivierte Funktionsraum (3') in der Mathematik bekannt ist als der Raum von *nomographischen Funktionen* (R. C. Buck, "Approximate complexity and functional representation", J. Math. Anal. Appl., Bd. 70, Seiten 280 - 298, 1979), der im Folgenden durch $\mathcal{N}[\mathbb{E}^n]$ bezeichnet ist. Die Funktionen werden nomographische Funktionen genannt, da sie die Basis von Nomographen (bzw. Nomogrammen) sind. Nomographen sind graphische Darstellungen, die nützlich für das Lösen von bestimmten Typen von Gleichungen sind (L. I. Epstein, Nomography. New York London: Interscience Publishers, 1958). Ein übliches Beispiel ist der "Smith Chart", der oft im Mikrowellen-Ingenieurswesen verwendet wird.

*Beispiel 2 (nomographische Funktionen):*

i) *arithmetisches Mittel:* $f(x_1, \ldots, x_n) = \frac{1}{n} \sum_i x_i$, mit $\varphi_i(x) = x$, für alle i = 1, ..., n und $\psi(y) = y/n$.

ii) *euklidische Norm:* $f(x_1, \ldots, x_n) = \sqrt{x_1^2 + \cdots + x_n^2}$, mit $\varphi_i(x) = x^2$, für alle i = 1, ..., n, und $\psi(y) = \sqrt{y}$.

iii) *Anzahl von aktiven Knoten:* $f(x_1, \ldots, x_n) = n$, mit $\varphi_i(x) = 1$, für alle

$$x \in \mathbb{E}$$

und i = 1, ..., n, und $\psi(y) = y$.

1) *Nomographische Funktionen mit beliebigen vor- und nachverarbeitenden Funktionen:*

Die Beobachtung, dass (3') genau der Raum von nomographischen Funktionen ist, führt sofort zu dem Beweis von Theorem 1.

*Beweis von Theorem 1:*

Der Beweis resultiert aus R. C. Buck, "Approximate complexity and functional representation", J. Math. Anal. Appl., Bd. 70, Seiten 280 - 298, 1979, wo es gezeigt wurde, dass jede

$$f \in \mathcal{F}[\mathbb{E}^n]$$

eine nomographische Darstellung

$$f(x_1, \ldots, x_n) = \psi\left( \sum_{i=1}^{n} \underbrace{2^{i-1} \varphi(x_i)}_{=:\varphi_i(x_i)} \right) \qquad (4')$$

hat, mit einem anwachsenden $\varphi : E \to E$, welches unabhängig von *f* ist (d. h. universell). Als Konsequenz ergibt sich $\mathcal{N}[\mathbb{E}^n] = \mathcal{F}[\mathbb{E}^n]$.

*Bemerkung 5:*

Ein ähnliches Theorem, welches beschränkt ist auf kontinuierliche gewünschte Funktionen, kann in D. A. Sprecher, "A representation theorem for continuous functions of several variables", Proc. Amer. Math. Soc., Bd. 16, Seiten 200 - 203, 1965, gefunden werden.

*Bemerkung 6:*

Es ist anzumerken, dass es im Theorem 1 keine Beschränkungen auf die Räume von vor- und nachverarbeitenden Funktionen gibt. Ferner sind $\psi$ und $g(x_1, ..., x_n) = \Sigma_i \varphi_i(x_i)$ im Allgemeinen diskontinuierlich. Allerdings hat jede Funktion im Beispiel 2 eine kontinuierliche Darstellung in dem Sinne, dass die vor- und nachverarbeitenden Funktionen kontinuierlich (aber nicht universell) sind. Daher wird in dem folgenden Unterabschnitt das Erfordernis von Kontinuität eingeführt in der Hoffnung, dass dieses die Aussage von Theorem 1 nicht beeinflusst, da Kontinuität für praktische Implementierungen vorteilhaft sein kann.

2) *Nomographische Funktionen mit kontinuierlichen vor- und nachverarbeitenden Funktionen:*

Im Folgenden bezeichnet $\mathcal{N}_0[\mathbb{E}^n]$ im Gegensatz zu $\mathcal{N}[\mathbb{E}^n]$ den Raum von nomographischen Funktionen mit der zusätzlichen Eigenschaft

$$(\varphi_1, \ldots, \varphi_n, \psi) \in \mathcal{C}[\mathbb{E}] \times \cdots \times \mathcal{C}[\mathbb{E}] \times \mathcal{C}[\mathbb{R}].$$

Wie wesentlich diese Kontinuitätseigenschaft ist, wird durch das nächste Theorem herausgestellt.

*Theorem 2:*

Der Raum von nomographischen Funktionen mit kontinuierlichen vor- und nachverarbeitenden Funktionen ist *nirgendwo dicht* im Raum von kontinuierlichen Funktionen, d. h. $\mathcal{N}_0[\mathbb{E}^n]$ ist nirgendwo dicht in $\mathcal{C}[\mathbb{E}^n]$.

*Beweis:*

Der konstruktive Beweis für beliebiges n wird gegeben durch R. C. Buck in "Nomographic functions are nowhere dense", Proc. Amer. Math. Soc., Bd. 85, Nr. 2, Seiten 195 - 199, Juni 1982. Allerdings wurde für den speziellen Fall *n* = 2 das Theorem früher bewiesen durch Arnold, "On the representation of functions of two variables in the form $\chi[\varphi(x) + \psi(y)]$", Uspekhi Math. Nauk, Bd. 12, Nr. 2, Seiten 119 - 121, 1957, englische Übersetzung.

Obwohl die Kontinuität von vor- und nachverarbeitenden Funktionen die Menge von berechenbaren gewünschten Funktionen reduziert, wird in dem verbleibenden Abschnitt gezeigt, dass verschiedene kleine Relaxationen zu gewünschten Funktionen führen können, die berechenbar sind mittels einem Funk-MAC, die nicht nomographisch gemäß $\mathcal{N}_0[\mathbb{E}^n]$ sind.

Betrachtet wird die gewünschte Funktion "geometrisches Mittel" von Beispiel 1 (ii). Obwohl es der gleichmäßige Grenzwert von der Sequenz von nomographischen Funktionen

$$\left\{ f_m(x_1, \ldots, x_n) = \psi\left( \sum_i \varphi_{i_m}(x_i) \right) = e^{\frac{1}{n} \sum_i \log_e (x_i + \frac{1}{m})} \right\}, \qquad (4a')$$

$(x_1,...,x_n) \in \mathbb{E}^n$ ist, wenn

$$m \quad \in \quad \mathbb{N}$$

nach Unendlich strebt, ist das "geometrische Mittel" nicht in dem Raum $\mathcal{N}_0[\mathbb{E}^n]$. Würde tatsächlich $\psi(\sum_i \varphi_i(x_i)) = (\prod_i x_i)^{\frac{1}{n}}$ überall in $\mathbb{E}^n$ sein, dann würde $\varphi_1(0) + ... + \varphi_n(0) = \varphi_1(1) + \cdots + \varphi_n(1)$ angewendet werden (V. I. Arnold, "On the representation of functions of two variables in the form $\chi[\varphi(x) + \psi(y)]$", Uspekhi

Math. Nauk, Bd. 12, Nr. 2, Seiten 119 - 121, 1957, englische Übersetzung) und daher $\psi(\varphi_1(0) + \cdots + \varphi_n(0)) = \psi(\varphi_1(1) + \cdots + \varphi_n(1))$. Dies führt jedoch zu einem Widerspruch wegen $0 = f(0, \ldots, 0) \neq f(1,\ldots,1) = 1$, und es wird gefolgert, dass keine kontinuierlichen Funktionen $\varphi_1,\ldots,\varphi_n,\psi$ existieren, welche sicherstellen könnten, dass das "geometrische Mittel" in $\mathcal{N}_0[\mathbb{E}^n]$ ist.

Offensichtlich liegt das Problem in dem Verhalten von $f$ auf dem Rand von $\mathbb{E}^n$ (d. h. 0 gehört zu dem Bereich), sodass eine geeignete Einschränkung zu einer nomographischen Darstellung für manche $f \notin \mathcal{N}_0[\mathbb{E}^n]$ führen kann, wie es anhand der folgenden Beispiele illustriert wird.

*Beispiel 3:*

Sei $(x_1, \ldots, x_n) \in \mathbb{X}^n := [x_{\min}, 1]^n$, mit $0 < x_{\min} < 1$, sodass

$$\mathbb{X}^n \subset \mathbb{E}^n.$$

i) *geometrisches Mittel:*

$$f(x_1, \ldots, x_n) = \left(\prod_i x_i\right)^{1/n} \in \mathcal{N}_0[\mathbb{X}^n],$$

mit

$$\varphi_i : \mathbb{X} \to \mathbb{R},$$

$\varphi_i(x) = \log_e(x)$, für alle $i = 1, \ldots, n$ und $\psi(y) = e^{y/n}$.

ii) *Kosinus des Produkts:*

$$f(x_1, \ldots, x_n) = \cos\left(\prod_i x_i\right) \in \mathcal{N}_0[\mathbb{X}^n],$$

mit $\varphi_i(x) = \log_e(x)$, für alle $i = 1, \ldots n$ und $\psi(y) = (\cos \circ \exp)(y) = \cos(e^y)$.

Ein alternativer Ansatz, um den Raum von gewünschten Funktionen, die mittels Funk-MACs berechenbar sind, zu vergrößern, besteht darin, geeignete Approximationen von gewünschten Funktionen durch nomographische Darstellungen zu erlauben. Dies resultiert in einem multivarianten Approximations-Problem, das in der folgenden Definition genauer spezifiziert wird.

*Definition 5 (annäherbare bzw. approximierbare nomographische Funktionen):*

Sei $\varepsilon > 0$ beliebig, aber fixiert. Dann wird

$$\mathcal{N}_0^\varepsilon[\mathbb{E}^n] := \left\{ f \in \mathcal{F}[\mathbb{E}^n] \,\middle|\, \exists(\varphi_1, \ldots, \varphi_n, \psi) \in \mathcal{C}[\mathbb{E}] \times \cdots \right.$$

$$\left. \cdots \times \mathcal{C}[\mathbb{E}] \times \mathcal{C}[\mathbb{R}] : \left\| f - \psi\left(\sum_i \varphi_i(x_i)\right) \right\|_\infty \leq \varepsilon \right\} \tag{4b'}$$

definiert als der Raum von *annäherbaren nomographischen Funktionen* bezüglich einer Präzision ε. Wenn

$$f \in \mathcal{N}_0^\varepsilon [\mathbb{E}^n],$$

dann gift $f(x_1, ..., x_n) \approx \psi(\sum_i \varphi_i(x_i))$.

Eine adäquate Charakterisierung von irgendeinem der Räume

$$\mathcal{N}_0^\varepsilon [\mathbb{E}^n]$$

ist aktuell ein ernsthaftes Problem, aber aufgrund der wohl bekannten Tatsache, dass für jedes $\varepsilon > 0$ ein $p_0 = p_0(\varepsilon)$ existiert, sodass

$$\forall p \geq p_0 \forall (x_1, \ldots, x_n) \in \mathbb{E}^n : \left| \max_{1 \leq i \leq n} \{x_i\} - \left( \sum_{i=1}^n x_i^p \right)^{\frac{1}{p}} \right| \leq \varepsilon \quad , \quad (4c')$$

rechtfertigen die folgenden zwei Beispiele, welche sehr wichtige gewünschte Funktionen für alarmgetriebene Sensor-Netzwerk-Anwendungen sind, zukünftige Untersuchungen von den Räumen von Definition 5.

*Beispiel 4 (annäherbare nomographische Funktionen):*

Sei $\varepsilon > 0$ beliebig, aber fixiert.

i) maximaler Wert: $\max_{1 \leq i \leq n} \{x_i\} \approx \psi(\sum_i \varphi_i(x_i))$, mit $\varphi_i(x) = x^{p0(\varepsilon)}$, für alle $i = 1, ..., n$ und $\psi(y) = y^{\frac{1}{p_0(\varepsilon)}}$.

ii) minimaler Wert: $\min_{1 \leq i \leq n} \{x_i\} \approx \psi(\sum_i \varphi(x_i))$, mit $\varphi_i(x) = \frac{1}{x^{p_0(\varepsilon)}}$, für alle $i = 1, ..., n$ und $\psi(y) = y^{-\frac{1}{p_0(\varepsilon)}}$.

Im Folgenden wird eine Berechnung mittels idealen Zeit-Divisions-Vielfach-Zugriffs-Kanälen beschrieben. In dem vorhergehenden Abschnitt ist gezeigt worden, dass die Kontinuität von vor- und nachverarbeitenden Funktionen den Raum von berechenbaren Funktionen wesentlich beeinflusst. Um ein vollständigeres Verständnis von diesem Verhältnis zu erhalten, wird in Definition 6 das Kommunikationsszenario auf eine Zeitfolge von *f*-MAC-Ausgängen erweitert, da es gewünscht ist, die natürliche Berechnungseigenschaft von Funk-MACs weiter auszunutzen.

*Definition 6 (erweiterter f-MAC)*:

Sei

$$\ell \quad \in \quad \mathbb{N}$$

eine fixierte Zeitinstanz und $\{\varphi_{ji}\}_{1 \leq j \leq n, 1 \leq i \leq \ell}$ eine Kollektion von vorverarbeitenden Funktionen. Dann wird ein erweiterter *f*-MAC der Ordnung *l* als die Zeitfolge $\left\{ \sum_{j=1}^n \varphi_{j1}(x_j), \ldots, \sum_{j=1}^n \varphi_{j\ell}(x_j) \right\}$ von *l* aufeinanderfolgenden empfangenen *f*-MAC-Ausgängen an der Fusions-Zentrale definiert.

Es ist interessant zu realisieren, dass die Frage bezüglich gewünschter Funktionen, die berechenbar sind mittels einem erweiterten *f*-MAC der Ordnung *l*, eng verbunden ist mit dem berühmten 13. Problem, das von David Hilbert in 1900 formuliert wurde (A. G. Vitushkin, "On hilbert's thirteenth problem and related questions", Russian Math. Surveys, Bd. 59, Nr. 1, Seiten 11 - 25, 2004). Das ursprüngliche Problem betrifft das Studium von Lösungen von algebraischen Gleichungen, und Hilbert mutmaßte, dass eine Lösung der allgemeinen Gleichung vom Grad 7 nicht als eine Superposition von kontinuierlichen Funktionen von zwei Variablen dargestellt werden kann.

Aufgrund von dem Theorem 2 ist es bereits bekannt, dass der Ausgang von einem erweiterten *f*-MAC der Ordnung 1 nicht ausreichend sein kann, um jedes

$$f \in \mathcal{C}[\mathbb{E}^n]$$

zu berechnen. Implizit mutmaßte Hilbert, dass auf der Basis eines erweiterten $f$-MAC endlicher Ordnung die Berechnung von jeder kontinuierlichen gewünschten Funktion nicht möglich ist, was von Kolmogorov in "On the representation of continuous functions of several variables by superposition of continuous functions of one variable and addition", Dokl. Akad. Nauk SSSR, Nr. 114, Seiten 953 - 956, 1957, englische Übersetzung, gegenbewiesen wurde. Eine bemerkenswerte Verbesserung von Kolmogorov's Ergebnis wird verwendet, um das Folgende zu behaupten.

*Theorem 3:*

Jede kontinuierliche gewünschte Funktion von $n$ Variablen ist berechenbar durch einen erweiterten $f$-MAC der Ordnung 2 $n$ + 1 mit kontinuierlichen vorverarbeitenden Funktionen unter Verwendung eines 1-Weg-Berechnungs-Netzwerks.

*Beweis:*

Der Beweis folgt aus [G. G. Lorentz, Approximation of Functions. New York: Holt, Rinehart und Winston, 1966, Ch. 11, Thm. 1], wo es gezeigt wurde, dass jedes

$$f \in \mathcal{C}[\mathbb{E}^n]$$

repräsentierbar ist als

$$f(x_1, \ldots, x_n) = \sum_{i=1}^{2n+1} f_i(x_1, \ldots, x_n) \qquad (5')$$

mit

$$f_i(x_1, \ldots, x_n) = \psi\left(\sum_{j=1}^{n} \xi_j \varphi_i(x_j)\right) \in \mathcal{N}_0[\mathbb{E}^n]$$

und Konstanten $\xi_j \in (0, 1]$, $j = 1, ..., n$, wobei nur

$$\psi \in \mathcal{C}[\mathbb{R}^n]$$

von $f$ abhängt, aber die $n$ (2 $n$ + 1) kontinuierlichen vorverarbeitenden Funktionen $\xi_j \varphi_i$ nicht.

*Beobachtung 2:*

Wie bei der Beobachtung 1 ist die Hard- und Software von Sensorknoten vollständig unabhängig von der gewünschten Funktion, die die Fusions-Zentrale beabsichtigt zu berechnen, sodass keine Art von a priori oder Feedback-Information erforderlich ist (d. h. kein 2-Weg-Berechnungs-Netzwerk), um die Knoten zu informieren, ob die gewünschte Funktion sich geändert hat.

*Bemerkung 7:*

In Y. Sternfeld, "Dimension, superposition of functions and separation of points, in compact metric spaces", Israel J. Math., Bd. 50, Seiten 13 - 52, 1985, wurde gezeigt, dass im Theorem 3 die Ordnung 2 n + 1 nicht reduziert werden kann.

*Korollar 1:*

Der Banach-Raum von kontinuierlichen Funktionen auf $\mathbb{E}^n$ ist die algebraische Summe von $2n+1$ nirgendwo dichten Unterräumen.

Theorem 3 führt mit Korollar 1 zu weiteren allgemeinen Fragen. Insbesondere bedeutet Theorem 3, dass mit kontinuierlichen vor- und nachverarbeitenden Funktionen zumindest $2n+1$ Zeit-Slots (Time-Slots) erforderlich sind, um jede kontinuierliche gewünschte Funktion zu berechnen mittels dem Funk-MAC, was betrachtet werden kann wie ein Sammeln von topologischen Dimensionen in der Zeit. Allerdings sind die gewünschten Funktionen von den Beispielen 2, 3 und 4 offensichtlich bereits mit einem erweiterten *f*-MAC der Ordnung 1 erfüllt, sodass es eine natürlich aufkommende Aufgabe für zukünftige Arbeiten ist, zu charakterisieren, welche gewünschten Funktionen berechenbar sind durch einen erweiterten, *f*-MAC der Ordnung *l*, $2 \le \ell < 2n+1$.

Obwohl es für $\ell \ge n$ alternative Ansätze gibt, um auf geeignete Weise gewünschte Funktionen über Sensor-Netzwerke zu berechnen (z. B., in einem idealen TDMA-Protokoll werden die gesamten analogen Sensor-Ablesungen zu der Fusions-Zentrale gesendet), kann die Untersuchung von erweiterten *f*-MACs der Ordnung $\ell > n$ relevant sein, da praktische TDMA-Protokolle eine Menge an Zusatz (Overhead) induzieren und nur quantisierte Sensordaten prozessieren, was die Transmissionszeit deutlich erhöht durch eine verringerte Berechnungsgenauigkeit.

Zusammenfassend ermöglichen manche Ausführungsbeispiele ein Konzept für die Analyse des Raums von Funktionen, der analog berechenbar ist mittels einem Funk-Vielfach-Zugriffs-Kanal, und für die Klassifikation von entsprechenden Kommunikations-Pattern. Da eine Quantisierung die Berechnungsgenauigkeit signifikant reduziert und ein Versuch, den entsprechenden Quantisierungsfehler zu kontrollieren, bereits für lineare Systeme scheitern könnte (H. Boche und U. J. Mönich, "Complete characterization of stable bandlimited systems under quantization and thresholding", IEEE Trans. Signal Process., Bd. 57, Nr. 12, Seiten 4.699 - 4.710, Dez. 2009, und -----, "Behavior of the quantization operator for bandlimited, nonoversampled signals", IEEE Trans. Inf. Theory, Bd. 56, Nr. 5, Seiten 2.433 - 2.440, Mai 2010), sind analoge Schemas für einen viel größeren Raum von gewünschten Funktionen möglich. Insbesondere wurde erkannt, dass tatsächlich jede reelle Funktion von n Variablen universell berechnet werden kann mittels einem Funk-MAC, solange es keine Beschränkungen hinsichtlich der Auswahl von vor- und nachverarbeitenden Funktionen gibt. In diesem Zusammenhang bedeutet Universalität, dass die vorverarbeitenden Funktionen und somit die Hard- und Software von Knoten vollständig unabhängig von der gewünschten Funktion sind, was äquivalent ist zu der Tatsache, dass Feedback-Kanäle unnötig sind.

Die Situation ändert sich, wenn kontinuierliche vor- und nachverarbeitende Funktionen benötigt werden, da dann der Raum von berechenbaren gewünschten Funktionen reduziert wird auf eine dünn besiedelte Untermenge von $\mathcal{C}[\mathbb{E}^n]$. Allerdings konnte gezeigt werden, dass manche Funktionen gerettet werden können, wenn man den Bereich von vorverarbeitenden Funktionen auf geeignete Untermengen beschränkt, wenn man approximierbare nomographische Darstellungen verwendet oder wenn man eine Zeitfolge von MAC-Ausgängen ausnutzt, wobei Letzteres eng verbunden ist mit Hilbert's 13. Problem und ebenfalls in universellen Berechnungsschemas resultiert.

Somit schaffen Ausführungsbeispiele ein Konzept zum Analysieren des Raums von Funktionen, der analog berechenbar ist mittels einem Funk-Vielfach-Zugriffs-Kanal. Um lineare Funktionen von den Messungen in Sensor-Netzwerken effizient zu berechnen, wurde es vor Kurzem gezeigt, dass die Überlagerungs-Eigenschaft von dem Funk-Vielfach-Zugriffs-Kanal vorteilhafterweise ausgenutzt werden kann. Unter Verwendung von geeigneten vor- und nachverarbeitenden Funktionen, die auf realen Sensor-Ablesungen und auf dem überlagerten Signal, das von einer Fusions-Zentrale empfangen wird, operieren, kann die natürliche Berechnungseigenschaft des Funk-Kanals angepasst werden, sodass eine viel größere Klasse von Funktionen ebenfalls effizient berechenbar ist. Der entsprechende Raum von Funktionen, die im Prinzip berechenbar oder zumindest approximierbar sind, werden in einer analogen Weise mittels einem Funk-Vielfach-Zugriffs-Kanal analysiert, und es wird gezeigt, in welchem Umfang dies das Kommunikations-Pattern und die Komplexität von Knoten beeinflusst. Schließlich wird das Transmissions-Szenario zu einer Sequenz von aufeinanderfolgenden empfangenen Vielfach-Zugriffs-Kanal-Ausgangs-Signalen geändert, und es wird beobachtet, dass die sich ergebenden Fragen bezüglich der Berechenbarkeit von Funktionen mit dem berühmten 13. Hilbert-Problem verbunden sind.

**Patentansprüche**

**1.** Sensorfunksystem,
bestehend aus mehreren Sendern n der Anzahl N und einem Empfänger, der mit den Sendern n jeweils über einen drahtlosen Vielfachzugriffskanal in Verbindung steht,
wobei der Vielfachzugriffskanal mehrere Slots m der Anzahl M innerhalb eines Übertragungsrahmens aufweist,

wobei jeder Sender n bestückt ist

- mit einem Sensor, der an seinem Ausgang einen Messwert $x_n$ liefert,
- mit einem Skalierungsgenerator, der jeden Messwert $x_n$ auf einen Skalierungswert $g_{nm}(x_n)$ in Abhängigkeit von einem Slot m des Vielfachzugriffskanals skaliert, und
- mit einer Funkstation, die innerhalb eines Slots m den Skalierungswert $g_{nm}(x_n)$ über den Vielfachzugriffskanal an den Empfänger überträgt,

wobei der Empfänger bestückt ist

- mit einem Signalstärkeschätzer und
- mit einem Funktionengenerator, der mit dem Ausgang des Signalstärkeschätzers verschaltet ist,

wobei innerhalb eines Slots m alle dem Slot m zugeordneten Skalierungswerte $g_{nm}(x_n)$ der Sender n gleichzeitig zur Weiterverarbeitung an den Signalstärkeschätzer übertragen werden, und
wobei innerhalb eines Übertragungsrahmens der Skalierungsgenerator eines jeden Senders n für jeden Slot m einen anderen Skalierungswert $g_{nm}(x_n)$ liefert, sodass mit dem Funktionengenerator aus den Ausgangswerten des Signalstärkeschätzers eine vorgegebene stetige Funktion $f(x_1, ..., x_N)$ berechenbar ist.

2. Sensorfunksystem nach Anspruch 1, **dadurch gekennzeichnet, dass** der Skalierungsgenerator den Skalierungswert $g_{nm}(x_n)$ gemäß der Form

$$g_{nm}(x_n) = \alpha_n \cdot \varphi(x_n + m \cdot a)$$

liefert, wobei $\alpha_n$ und a Konstanten sind und wobei $\varphi$ eine stetige Funktion ist.

3. Sensorfunksystem nach Anspruch 2, **dadurch gekennzeichnet, dass** der Signalstärkeschätzer die Funktion ausführt gemäß der Form

$$y_m = \sum_{n=1}^{N} g_{nm}(x_n)$$

4. Sensorfunksystem nach Anspruch 3, **dadurch gekennzeichnet, dass** der Funktionengenerator die Funktion ausführt gemäß der Form

$$f(x_1, ..., x_N) = \sum_{m=1}^{M} \psi_m(y_m)$$

wobei $\psi_m$ stetige Funktionen sind.

5. Sensorfunksystem nach Anspruch 3, **dadurch gekennzeichnet, dass** der Funktionengenerator zum Umgang mit weiteren nicht zur Menge C der bestehenden Sender gehörenden, aber zumindest mit einigen Sendern der Menge C überlappend ausstrahlenden Sendern die Funktion ausführt gemäß der Form

$$f(x_1, ..., x_N) = \sum_{m=1}^{M} \psi_m(z_m)$$

mit

$$z_m = y_m + \beta_m$$

und mit

$$\beta_m = \sum_{n \notin C} \alpha_n \cdot \varphi(0 + m \cdot a)$$

wobei $\psi_m$ stetige Funktionen sind.

6. Sensorfunksystem nach Anspruch 4 oder 5, **dadurch gekennzeichnet, dass** die Anzahl M der Slots m innerhalb eines Übertragungsrahmens M = 2·N+1 beträgt.

7. Verfahren zum Betreiben eines Sensorfunksystems, bei dem mehrere Sender n der Anzahl N vorgesehen werden und bei dem ein Empfänger vorgesehen wird, der mit den Sendern n jeweils über einen drahtlosen Vielfachzugriffskanal in Verbindung steht, wobei der Vielfachzugriffskanal mehrere Slots m der Anzahl M innerhalb eines Übertragungsrahmens aufweist, wobei jeder Sender n bestückt wird

- mit einem Sensor, der an seinem Ausgang einen Messwert $x_n$ liefert,
- mit einem Skalierungsgenerator, der jeden Messwert $x_n$ auf einen Skalierungswert $g_{nm}(x_n)$ in Abhängigkeit von einem Slot m des Vielfachzugriffskanals skaliert, und
- mit einer Funkstation, die innerhalb eines Slots m den Skalierungswert $g_{nm}(x_n)$ über den Vielfachzugriffskanal an den Empfänger überträgt,

wobei der Empfänger bestückt wird

- mit einem Signalstärkeschätzer und
- mit einem Funktionengenerator, der mit dem Ausgang des Signalstärkeschätzers verschaltet ist,

wobei innerhalb eines Slots m alle dem Slot m zugeordneten Skalierungswerte $g_{nm}(x_n)$ der Sender n gleichzeitig zur Weiterverarbeitung an den Signalstärkeschätzer übertragen werden, und wobei innerhalb eines Übertragungsrahmens der Skalierungsgenerator eines jeden Senders n für jeden Slot m einen anderen Skalierungswert $g_{nm}(x_n)$ liefert, sodass mit dem Funktionengenerator aus den Ausgangswerten des Signalstärkeschätzers eine vorgegebene stetige Funktion $f(x_1, ..., x_N)$ berechenbar ist.

8. Verfahren nach Anspruch 7, **dadurch gekennzeichnet, dass** der Skalierungsgenerator den Skalierungswert $g_{nm}(x_n)$ gemäß der Form

$$g_{nm}(x_n) = \alpha_n \cdot \varphi(x_n + m \cdot a)$$

liefert, wobei $\alpha_n$ und a Konstanten sind und wobei $\varphi$ eine stetige Funktion ist.

9. Verfahren nach Anspruch 8, **dadurch gekennzeichnet, dass** der Signalstärkeschätzer die Funktion ausführt gemäß der Form

$$y_m = \sum_{n=1}^{N} g_{nm}(x_n)$$

10. Verfahren nach Anspruch 9, **dadurch gekennzeichnet, dass** der Funktionengenerator die Funktion ausführt gemäß der Form

$$f(x_1, ..., x_N) = \sum_{m=1}^{M} \psi_m(y_m)$$

wobei $\psi_m$ stetige Funktionen sind.

**11.** Verfahren nach Anspruch 9, **dadurch gekennzeichnet, dass** der Funktionengenerator zum Umgang mit weiteren nicht zur Menge C der bestehenden Sender gehörenden, aber zumindest mit einigen Sendern der Menge C überlappend ausstrahlenden Sendern die Funktion ausführt gemäß der Form

$$f(x_1, \ldots, x_N) = \sum_{m=1}^{M} \psi_m(z_m)$$

mit

$$z_m = y_m + \beta_m$$

und mit

$$\beta_m = \sum_{n \notin C} \alpha_n \cdot \varphi(0 + m \cdot a)$$

wobei $\psi_m$ stetige Funktionen sind.

**12.** Verfahren nach Anspruch 10 oder 11, **dadurch gekennzeichnet, dass** die Anzahl M der Slots m innerhalb eines Übertragungsrahmens M = 2·N+1 beträgt.

**Claims**

**1.** Sensor radio system,
consisting of several transmitters n of the number N and a receiver connected to each of the transmitters n via a wireless multi-access channel,
wherein the multi-access channel comprises several slots m of the number M within a transmission frame,

- wherein each transmitter n is equipped with
- a sensor delivering a measured value $x_n$ at its output,
- a scaling generator scaling each measured value $x_n$ to a scaling value $g_{nm}(x_n)$ depending on a slot m of the multi-access channel, and
- a radio station transmitting within a slot m the scaling value $g_{nm}(x_n)$ via the multi-access channel to the receiver,

wherein the receiver is equipped with

- a signal strength estimator, and
- a function generator connected to the output of the signal strength estimator,

wherein, within a slot m, all scaling values $g_{nm}(x_n)$ of the transmitters n associated with the slot m are simultaneously transmitted to the signal strength estimator for further processing, and
wherein, within a transmission frame, the scaling generator of each transmitter n delivers for each slot m a different scaling value $g_{nm}(x_n)$ so that a predetermined continuous function $f(x_1, \ldots, x_N)$ is calculable with the function generator from the output values of the signal strength estimator.

**2.** Sensor radio system according to claim 1, **characterized in that** the scaling generator delivers the scaling value $g_{nm}(x_n)$ according to

$$g_{nm}(x_n) = \alpha_n \cdot \varphi(x_n + m \cdot a)$$

wherein $\alpha_n$ and a are constants and wherein $\varphi$ is a continuous function.

3. Sensor radio system according to claim 2, **characterized in that** the signal strength estimator performs the function according to

$$y_m = \sum_{n=1}^{N} g_{nm}(x_n)$$

4. Sensor radio system according to claim 3, **characterized in that** the function generator performs the function according to

$$f(x_1, \ldots, x_N) = \sum_{m=1}^{M} \psi_m(y_m)$$

wherein $\psi_m$ are continuous functions.

5. Sensor radio system according to claim 3, **characterized in that**, for handling further transmitters which do not form part of set C of the existing transmitters but transmit in an overlapping manner with at least some transmitters of set C, the function generator performs the function according to

$$f(x_1, \ldots, x_N) = \sum_{m=1}^{M} \psi_m(z_m)$$

wherein

$$z_m = y_m + \beta_m$$

and wherein

$$\beta_m = \sum_{n \notin C} \alpha_n \cdot \varphi(0 + m \cdot a)$$

wherein $\psi_m$ are continuous functions.

6. Sensor radio system according to claim 4 or claim 5, **characterized in that** the number M of slots of the slots m within a transmission frame is M = 2·N+1.

7. Method for operating a sensor radio system,
   wherein several transmitters n of the number N are provided and wherein a receiver connected to each of the transmitters n via a wireless multi-access channel is provided,
   wherein the multi-access channel comprises several slots m of the number M within a transmission frame,

   - wherein each transmitter n is equipped with
   - a sensor delivering a measured value $x_n$ at its output,
   - a scaling generator scaling each measured value $x_n$ to a scaling value $g_{nm}(x_n)$ depending on a slot m of the multi-access channel, and
   - a radio station transmitting within a slot m the scaling value $g_{nm}(x_n)$ via the multi-access channel to the receiver,

   wherein the receiver is equipped with

   - a signal strength estimator, and
   - a function generator connected to the output of the signal strength estimator,

   wherein, within a slot m, all scaling values $g_{nm}(x_n)$ of the transmitters n associated with the slot m are simultaneously transmitted to the signal strength estimator for further processing, and
wherein, within a transmission frame, the scaling generator of each transmitter n delivers for each slot m a different scaling value $g_{nm}(x_n)$ so that a predetermined continuous function $f(x_1, ..., x_N)$ is calculable with the function generator from the output values of the signal strength estimator.

8. Method according to claim 7, **characterized in that** the scaling generator delivers the scaling value $g_{nm}(x_n)$ according to

$$g_{nm}(x_n) = \alpha_n \cdot \varphi(x_n + m \cdot a)$$

wherein $\alpha_n$ and a are constants and wherein $\varphi$ is a continuous function.

9. Method according to claim 8, **characterized in that** the signal strength estimator performs the function according to

$$y_m = \sum_{n=1}^{N} g_{nm}(x_n)$$

10. Method according to claim 9, **characterized in that** the function generator performs the function according to

$$f(x_1, ..., x_N) = \sum_{m=1}^{M} \psi_m(y_m)$$

wherein $\psi_m$ are continuous functions.

11. Method according to claim 9, **characterized in that**, for handling further transmitters which do not form part of set C of the existing transmitters but transmit in an overlapping manner with at least some transmitters of set C, the function generator performs the function according to

$$f(x_1, ..., x_N) = \sum_{m=1}^{M} \psi_m(z_m)$$

wherein

$$z_m = y_m + \beta_m$$

and wherein

$$\beta_m = \sum_{n \notin C} \alpha_n \cdot \varphi(0 + m \cdot a)$$

wherein $\psi_m$ are continuous functions.

12. Method according to claim 10 or 11, **characterized in that** the number M of slots of the slots m within a transmission frame is $M = 2 \cdot N + 1$.

**Revendications**

1. Système radio à capteur
composé d'une pluralité d'émetteurs n au nombre de N et d'un récepteur qui est en communication avec chacun des émetteurs n via un canal d'accès multiple sans fil,

dans lequel le canal d'accès multiple présente plusieurs créneaux m au nombre de M dans une trame de transmission, dans lequel chaque émetteur n est équipé

- d'un capteur qui fournit une valeur de mesure $x_n$ à sa sortie,
- d'un générateur de mise à échelle qui met à échelle chaque valeur de mesure $x_n$ à une valeur de mise à échelle $g_{nm}(x_n)$ en fonction d'un créneau m du canal d'accès multiple, et
- avec une station radio qui transmet au récepteur dans un créneau m la valeur de mise à échelle $g_{nm}(x_n)$ via le canal d'accès multiple,

dans lequel le récepteur est équipé

- d'un estimateur d'intensité de signal, et
- d'un générateur de fonctions qui est connecté à la sortie de l'estimateur d'intensité de signal,

dans lequel, dans un créneau m, toutes les valeurs de mise à échelle $g_{nm}(x_n)$ des émetteurs n associés au créneau m sont transmises simultanément à l'estimateur d'intensité de signal pour traitement ultérieur, et
dans lequel, dans une trame de transmission, le générateur de mise à échelle de chaque émetteur n fournit pour chaque créneau m une autre valeur de mise à échelle $g_{nm}(x_n)$, de sorte que par le générateur de fonctions puisse être calculée une fonction continue prédéterminée $f(x_1, ..., x_N)$ à partir des valeurs de sortie de l'estimateur d'intensité de signal.

2. Système radio à capteur selon la revendication 1, **caractérisé par le fait que** le générateur de mise à échelle fournit la valeur de mise à échelle $g_{nm}(x_n)$ selon la forme

$$g_{nm}(x_n) = \alpha_n \cdot \varphi(x_n + m \cdot a)$$

où $\alpha_n$ et a sont des constantes et où $\varphi$ est une fonction continue.

3. Système radio à capteur selon la revendication 2, **caractérisé par le fait que** l'estimateur d'intensité de signal exécute la fonction selon la forme

$$y_m = \sum_{n=1}^{N} g_{nm}(x_n)$$

4. Système radio à capteur selon la revendication 3, **caractérisé par le fait que** le générateur de fonctions exécute la fonction selon la forme

$$f(x_1, ..., x_N) = \sum_{m=1}^{M}$$

où $\psi_m$ sont des fonctions continues.

5. Système radio à capteur selon la revendication 3, **caractérisé par le fait que** le générateur de fonctions exécute, pour le traitement avec d'autres émetteurs n'appartenant pas à la quantité C des émetteurs existants, mais émettant en recouvrement au moins avec certains émetteurs de la quantité C, la fonction selon la forme

$$f(x_1, ..., x_N) = \sum_{m=1}^{M} \psi_m(z_m)$$

avec

$$z_m = y_m + \beta_m$$

et avec

$$\beta_m = \sum_{n \notin C} a_n \cdot \varphi(0 + m \cdot a)$$

où $\psi_m$ sont des fonctions continues.

6. Système radio à capteur selon la revendication 4 ou 5, **caractérisé par le fait que** le nombre M des créneaux m dans une trame de transmission est de M = 2·N+1.

7. Procédé permettant de faire fonctionner un système radio à capteur,
   dans lequel sont prévus plusieurs émetteurs n au nombre de N et dans laquelle est prévu un récepteur qui est en communication avec chacun des émetteurs n via un canal d'accès multiple sans fil,
   dans lequel le canal d'accès multiple présente une pluralité de créneaux m au nombre de M dans une trame de transmission,
   dans lequel chaque émetteur n est équipé

   - d'un capteur qui fournit une valeur de mesure $x_n$ à sa sortie,
   - d'un générateur de mise à échelle qui met à échelle chaque valeur de mesure $x_n$ à une valeur de mise à échelle $g_{nm}(x_n)$ en fonction d'un créneau m du canal d'accès multiple, et
   - d'une station radio qui transmet au récepteur, dans un créneau m, la valeur de mise à échelle $g_{nm}(x_n)$ via le canal d'accès multiple,
   dans lequel le récepteur est équipé
   - d'un estimateur d'intensité de signal, et
   - d'un générateur de fonctions connecté à la sortie de l'estimateur d'intensité de signal,

   dans lequel. dans un créneau m, toutes les valeurs de mise à échelle $g_{nm}(x_n)$ des émetteurs n associés au créneau m sont transmises simultanément à l'estimateur d'intensité de signal pour traitement ultérieur, et
   dans lequel, dans une trame de transmission, le générateur de mise à échelle de chaque émetteur n fournit pour chaque créneau m une autre valeur de mise à échelle $g_{nm}(x_n)$, de sorte que par le générateur de fonctions puisse être calculée une fonction continue prédéterminée $f(x_1, ..., x_N)$ à partir des valeurs de sortie de l'estimateur d'intensité de signal.

8. Procédé selon la revendication 7, **caractérisé par le fait que** le générateur de mise à échelle fournit la valeur de mise à échelle $g_{nm}(x_n)$ selon la forme

$$g_{nm}(x_n) = a_n \cdot \varphi(x_n + m \cdot a)$$

où $\alpha_n$ et a sont des constantes et où $\varphi$ est une fonction continue.

9. Procédé selon la revendication 8, **caractérisé par le fait que** l'estimateur d'intensité de signal exécute la fonction selon la forme

$$y_m = \sum_{n=1}^{N} g_{nm}(x_n)$$

10. Procédé selon la revendication 9, **caractérisé par le fait que** le générateur de fonctions exécute la fonction selon la forme

$$f(x_1, ..., x_N) = \sum_{m=1}^{M} \psi_m(y_m)$$

où $\psi_m$ sont des fonctions continues.

**11.** Procédé selon la revendication 9, **caractérisé par le fait que** le générateur de fonctions exécute, pour le traitement avec d'autres émetteurs n'appartenant pas à la quantité C des émetteurs existants, mais émettant en recouvrement au moins avec certains émetteurs de la quantité C, la fonction selon la forme

$$f(x_1, \ldots, x_N) = \sum_{m=1}^{M} \psi_m(z_m)$$

avec

$$z_m = y_m + \beta_m$$

et avec

$$\beta_m = \sum_{n \notin C} a_n \cdot \varphi(0 + m \cdot a)$$

où $\psi_m$ sont des fonctions continues.

**12.** Procédé selon la revendication 10 ou 11, **caractérisé par le fait que** le nombre M des créneaux m dans une trame de transmission est de M = 2·N+1.

FIG 1

FIG 2

EP 2 590 342 B1

EP 2 590 342 B1

$X_1$ → $\varphi_1$ → $\varphi_1(X_1)$

$X_2$ → $\varphi_2$ → $\varphi_2(X_2)$

$X_n$ → $\varphi_n$ → $\varphi_n(X_n)$

idealer MAC → $y$ → $\psi$ → $f(X_1,...,X_n)$

angepasster MAC ($f$-MAC)

FIG 3

O Fusionszentrale     △ „Dumm"-Knoten     □ „Schlau"-Knoten

FIG 4

EP 2 590 342 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010000735 A1

**In der Beschreibung aufgeführte Nicht-Patentliteratur**

- **M. GOLDENBAUM ; S. STANCZAK ; M. KALIS-ZAN.** On Function Computation via Wireless Sensor Multiple-Access Channels. *Proc. IEEE Wireless Communications & Networking Conference (WCNC),* 2009
- **J. BRAUN ; M. GRIEBEL.** *On a Constructive Proof of Kolmogorov's Superposition Theorem. Constr. Approx.,* 2009, vol. 30 (3), 653-675
- **A. GIRIDHAR ; P. R. KUMAR.** Toward a theory of in-network computation in wireless sensor networks. *IEEE Commun. Mag.,* April 2006, vol. 44 (4), 98-107
- **B. NAZER ; M. GASTPAR.** Computation over multiple-access channels. *IEEE Trans. Inf. Theory,* Oktober 2007, vol. 53 (10), 3498-3516
- **S. STANCZAK ; M. WICZANOWSKI ; H. BOECHE.** Distributed utility-based power control: Objectives and algorithms. *IEEE Trans. Signal Process.,* Oktober 2007, vol. 55 (10), 5058-5068
- **M. GOLDENBAUM ; S. STANCZAK ; M. KALIS-ZAN.** On function computation via wireless sensor multiple-access channels. *Proc. IEEE Wireless Communications & Networking Conference (WCNC),* April 2009
- **M. GOLDENBAUM ; S. STANCZAK.** Computing the geometric mean over multiple-access channels: Error analysis and comparisons. *Proc. 44th Asilomar Conference on Signals, Systems and Computers,* November 2010, 2.172-2.178
- **M. GOLDENBAUM ; S. STANCZAK.** Computing the geometric mean over multiple-access channels: Error analysis and comparisons. *Proc. 44th Asilomar Conference on Signals, Systems and Computers,* November 2010, 2.172-2.178
- Computing functions via simo multiple-access channels: How much channel knowledge is needed?. *Proc. IEEE International Conference on Acoustics, Speech and Signal Processing (ICASSP),* Marz 2010, 3.394-3.397
- **R. C. BUCK.** Approximate complexity and functional representation. *J. Math. Anal. Appl.,* 1979, vol. 70, 280-298
- **L. I. EPSTEIN.** Nomography. Interscience Publishers, 1958
- **D. A. SPRECHER.** A representation theorem for continuous functions of several variables. *Proc. Amer. Math. Soc.,* 1965, vol. 16, 200-203
- **R. C. BUCK.** Nomographic functions are nowhere dense. *Proc. Amer. Math. Soc.,* Juni 1982, vol. 85 (2), 195-199
- **ARNOLD.** On the representation of functions of two variables in the form $\chi[\varphi(x) + \psi(y)]$. *Uspekhi Math. Nauk,* 1957, vol. 12 (2), 119-121
- **V. I. ARNOLD.** On the representation of functions of two variables in the form $\chi[\varphi(x) + \psi(y)]$. *Uspekhi Math. Nauk,* 1957, vol. 12 (2), 119-121
- **A. G. VITUSHKIN.** On hilbert's thirteenth problem and related questions. *Russian Math. Surveys,* 2004, vol. 59 (1), 11-25
- **KOLMOGOROV.** On the representation of continuous functions of several variables by superposition of continuous functions of one variable and addition. *Dokl. Akad. Nauk SSSR,* 1957, 953-956
- **G. G. LORENTZ.** Approximation of Functions. Holt, Rinehart und Winston, 1966
- **Y. STERNFELD.** Dimension, superposition of functions and separation of points, in compact metric spaces. *Israel J. Math.,* 1985, vol. 50, 13-52
- **H. BOCHE ; U. J. MÖNICH.** Complete characterization of stable bandlimited systems under quantization and thresholding. *IEEE Trans. Signal Process.,* Dezember 2009, vol. 57 (12), 4.699-4.710
- Behavior of the quantization operator for bandlimited, nonoversampled signals. *IEEE Trans. Inf. Theory,* Mai 2010, vol. 56 (5), 2.433-2.440